Europäisches Patentamt

European Patent Office

Office européen des brevets

(19)

(11) **EP 1 326 937 B1**

(12) **EUROPÄISCHE PATENTSCHRIFT**

(45) Veröffentlichungstag und Bekanntmachung des Hinweises auf die Patenterteilung:
**14.04.2004 Patentblatt 2004/16**

(21) Anmeldenummer: 01986709.2

(22) Anmeldetag: **09.10.2001**

(51) Int Cl.⁷: $C09J\ 7/02$, $C09J\ 131/04$

(86) Internationale Anmeldenummer:
**PCT/EP2001/011676**

(87) Internationale Veröffentlichungsnummer:
**WO 2002/031074 (18.04.2002 Gazette 2002/16)**

(54) **OBERFLÄCHENSCHUTZFOLIE FÜR FRISCHE AUTOMOBILLACKFLÄCHEN MIT EINEM MEHRKOMPONENTENKLEBER**

SURFACE PROTECTION FILM FOR FRESHLY PAINTED AUTOMOBILE SURFACES WITH A MULTICOMPONENT ADHESIVE

PELLICULE DE PROTECTION DE SURFACE POUR SURFACES D'AUTOMOBILES FRAICHEMENT PEINTES CONTENANT UNE COLLE A PLUSIEURS COMPOSANTS

(84) Benannte Vertragsstaaten:
**DE ES FR GB IT**

(30) Priorität: **12.10.2000 DE 10050449**
**29.11.2000 DE 10059360**

(43) Veröffentlichungstag der Anmeldung:
**16.07.2003 Patentblatt 2003/29**

(73) Patentinhaber: **Tesa AG**
**20253 Hamburg (DE)**

(72) Erfinder:
• **BÖHM, Nicolai**
**20257 Hamburg (DE)**

• **KLEMP, Jobst-Waldemar**
**22869 Schenefeld (DE)**
• **KRAWINKEL, Thorsten**
**22457 Hamburg (DE)**
• **LÜHMANN, Bernd**
**22848 Hamburg (DE)**

(74) Vertreter: **Stubbe, Andreas et al**
**tesa AG**
**Quickbornstrasse 24**
**20253 Hamburg (DE)**

(56) Entgegenhaltungen:
**EP-A- 0 761 315        EP-A- 0 826 754**

**Beschreibung**

Die Erfindung betrifft eine Schutzfolie, die rasch ein hohes Haftungsniveau auf frischen Kraftfahrzeuglacken erreicht, aber dennoch nach langen Verklebungszeiten ohne großen Kraftaufwand wieder entfernbar ist und die aus diesem Grund hervorragend geeignet ist für den Transportschutz von Neufahrzeugen, um die empfindlichen Lackflächen gegen Verschmutzungen und Beschädigungen zu schützen.

Die Konservierung und der Schutz von Kraftfahrzeugen während des Transports vom Hersteller zum Händler wird schon seit geraumer Zeit praktiziert.

Die herkömmliche Methode der Konservierung von Automobilen ist das Auftragen von Paraffinwachsen in der Stärke von 5 bis 20 µm. Es hat sich aber gezeigt, daß insbesondere bei waagerecht liegenden Flächen der Fahrzeuge, wie Motorhaube, Dach und Kofferraumdeckel, eine derart dünne und zumeist ungleichmäßige Schicht gegen äußere Einflüsse, wie beispielsweise die ätzende Wirkung von Vogelkot, nicht genügend Schutz bietet.

Ein erheblicher Nachteil der Paraffinwachsversiegelung ist die notwendige Entkonservierung mittels Dampfstrahl, Tensiden oder Lösungsmitteln. Die umweltgerechte Rückgewinnung und Entsorgung der Rückstände verursachen einen großen apparativen Aufwand sowie sehr hohe Kosten.

Eine aktuelle Entwicklung auf dem Gebiet des Automobil-Transportschutzes ist der Einsatz von Hauben, die das gesamte Fahrzeug bedecken und durch Wärmeeinwirkung paßgenau aufgeschrumpft werden.

Solche Haubenlösungen sind sehr kostspielig und erfordern großen Aufwand beim Anlegen der Haube, dem Aufschrumpfen und vor allem beim Einsteigen in den maskierten Wagen. Dafür sind eigens Reißverschlußöffnungen vorgesehen, die zeitraubend geöffnet und wieder verschlossen werden müssen. Die Sicht beim Rangieren ist stark beeinträchtigt, und es kommt durch eingeschlossenen Schmutz und durch unvermeidbares Scheuern auf dem Lack stellenweise zu Mattierungen. Diese Lösung hat sich bislang nicht durchsetzen können.

In den letzten Jahren werden statt dessen verstärkt temporär aufgebrachte selbstklebende Oberflächenschutzfolien angewendet. Diese sind speziell für den Transportschutz von frischen Kraftfahrzeugen vorgesehen und haben eine gegenüber den Wachsen deutlich verbesserte Schutzwirkung gegen mechanische und chemische Einflüsse sowie gegenüber den Hauben den Vorteil, kostengünstiger und deutlich schneller applizierbar zu sein.

Wesentliche Anforderungen an eine Oberflächenschutzfolie sind

- gute Schutzwirkung für den Lack gegen chemische und mechanische Einflüsse.
- Witterungsbeständigkeit über den gesamten Zeitraum der Transportkette vom Werk bis zum Händler, der je nach Entfernung etliche Monate betragen kann. So muß eine solche Folie auch nach langer intensiver Sonnenlichtexposition in einem Stück abziehbar sein und darf keine Klebmasserückstände auf dem Lack hinterlassen.
- ausreichende Anfangsklebrigkeit, um sich in schwierigen Verklebungsgeometrien nicht vorzeitig selbsttätig abzulösen.
- ausgewogene Endklebkraft, damit die Folie einerseits sicher haftet (auch bei starkem Fahrtwind oder Regen), andererseits ohne großen Kraftaufwand oder gar Reißen entfernbar ist. Ideal wäre die gewünschte Verklebungsfestigkeit von Anfang an. In der Praxis ist die Haftung jedoch zunächst schwächer und nimmt dann mit der Zeit und besonders unter Temperatureinfluß zu. Dieses wird in der Fachsprache "Aufziehen" genannt.
- Lackverträglichkeit, was bedeutet, daß die Lackoberfläche nach Entfernen des Klebebandes keinerlei Beeinträchtigungen in Form von Belägen oder Deformationen aufweisen soll. Deformationen sind Abdrücke im Lack, die sich einerseits als Konturen von Folienkante, eingeklebten Luftblasen und Falten, andererseits als Mattierungen unter der gesamten beklebten Fläche zeigen.

Gemäß dem Stand der Technik werden als Folienmaterialien in der Regel Polyolefine oder Mischungen aus solchen, die üblicherweise mit Lichtschutzmitteln und Titandioxid abgemischt sind, verwendet.

Als Selbstklebemassen finden vielfältige Systeme Verwendung, die aber ausnahmslos mit Schwächen behaftet sind.

Selbstklebemassen auf Naturkautschukbasis haben eine relativ gute Anfangshaftung und lassen sich rückstandsfrei wieder abziehen. Diese Massen sind allerdings selbst bei kurzzeitiger Einwirkung von UV-Strahlung nicht alterungsstabil. Dies führt zu starken schmierigen oder lackartig verhärteten Rückständen auf dem Lack nach praxisüblichen Witterungsbeanspruchungen über einige Monate.

In US 5,612,136 ist eine Schutzfolie mit einer Selbstklebemasse auf Acrylatbasis erwähnt. Polyacrylatmassen sind zwar sehr UV-stabil. Unterwirft man aber unvernetzte Polyacrylatmassen einer Wechselklimalagerung, so zeigen sie nur teilweise eine gute Verträglichkeit mit Lackoberflächen. Zudem zeigen die Polyacrylatmassen ein unerwünscht starkes Aufziehverhalten, d.h., das Entfernen der Folie nach einiger Zeit ist sehr kraftaufwendig. Sind diese Massen chemisch oder durch Strahlen stark vernetzt, lassen sie sich zwar leichter abziehen, verursachen aber auf der anderen Seite verstärkt deutlich sichtbare, bleibende Deformationen der Lackoberfläche.

Selbstklebemassen auf Polyisobutylenbasis (Polyisobutylenhomopolymer oder Butylkautschuk) zeigen nach einer Wechselklimalagerung auf in der Automobilindustrie gebräuchlichen Lacken eine geringe Haftfestigkeit. Sie ist bei ruckartiger Beanspruchung, wie sie bei Flattern im Fahrtwind auftritt, so gering, daß die in der Praxis geforderte Verklebungsfestigkeit nicht immer ausreichend gegeben ist. Insbesondere bei Feuchteeinfluß ist die Haftfestigkeit häufig derart reduziert, daß sich die Folie während des Transports von den geschützten Fahrzeugen ablöst, so daß zum einen keine Schutzwirkung mehr besteht und zum anderen ein Sicherheitsrisiko vorliegt, wenn sie nachfolgenden Fahrzeugen auf die Windschutzscheibe weht.

Darüber hinaus weist diese Selbstklebemasse keine Verträglichkeit mit den im Automobilbau üblichen Dichtungsprofilen beziehungsweise den darin enthaltenen Weichmachern auf: beim Abziehen der Schutzfolie von Fensterprofilen verbleiben auf dem Gummi Rückstände des Klebers. Derartige Klebeartikel sind in EP 0 519 278 A1, JP 95-325285 und US 5,601,917 beschrieben.

Wesentlich UV-stabiler als Polyisobutylene sind Kleber aus hydrierten Styrol-Dien-Blockcopolymeren, deren Anwendung in JP 08 027 444 beschrieben ist. Ein wesentlicher Nachteil solcher Blockcopolymere ist deren thermisch reversible Vernetzung über die Styroldomänen. Eine in sommerlichen Zeiten normale Erwärmung des beklebten Autos führt stets zum Schrumpf der Schutzfolie. Der in der Wärme weiche Kleber schmiert daher an den sich zurückziehenden Kanten der Klebefolie auf das Blech ab. Darüber wirken sich diese Systeme ungünstig auf die Lackoberfläche aus.

Die WO 96/37568 beschreibt die Verwendung von Polyhexen beziehungsweise Polyocten für einen unpolaren Haftkleber. Die in den Beispielen beschriebenen Polymere weisen wegen der geringen Kohäsion zwar ein geringes Aufziehen auf, bedingt durch das niedrige Molekulargewicht derartiger handelsüblicher Polymere führen diese Polymere aber ebenfalls zu Rückständen, die man durch Zugabe anderer Polymere, dort "cold flow restricting agent" genannt, zu vermeiden versucht. Für die Praxis sind die genannten Kleber trotzdem noch zu wenig kohäsiv, was nach Bewitterung zu Rückständen führt, insbesondere wenn das Klebeband durch Wärmeeinwirkung schrumpft.

Ein ähnliches Phänomen zeigen Ethylen-Propylen-Dien-Mischpolymerisate (EPDM), wie sie in DE 197 42 805 A1 genannt werden. Diese zeigen zusätzlich eine sehr begrenzte Anfangshaftung.

Die in der DE 195 32 220 A1 dargelegte Klebefolie mit Polyethylenvinylacetat-Kleber (EVAc) ist den oben beschriebenen Systemen in den Haftungseigenschaften deutlich überlegen.

Dieses System erreicht bereits nach kurzer Zeit gute Verklebungswerte und gewährleistet eine große Verklebungssicherheit gegen unerwünschtes selbsttätiges Ablösen während des Transportes. Auf der anderen Seite gerät die Verklebungsfestigkeit beim Abziehen nach Gebrauch zum Nachteil, da der Kraftaufwand wie bei den Polyacrylatmassen deutlich zu hoch ist, wodurch die Klebefolie häufig nicht ohne Abrisse abgezogen werden kann. Die Beeinflussung der zu schützenden Lacke ist im allgemeinen gering. Besonders hervorzuheben ist die UV-Stabilität,

Gute Anfangshaftung, große Verklebungssicherheit, Rückstandsfreiheit beim Abziehen und Lackverträglichkeit und Vermeiden des übermäßigen Aufziehens ist mit gängigen Methoden der Klebkraftreduzierung bei Haftklebemassen, zum Beispiel dem Zusatz von Füllstoffen, nicht zu lösen, ohne eine Beeinträchtigung der Lackverträglichkeit mit sich zu bringen. Füllstoffe in der Haftklebemasse führen bei dieser Anwendung zu flächenhaften Mattierungen durch Abdrücken der Partikel in die glatte Lackoberfläche, besonders unter Wärmeeinfluß.

Aufgabe der Erfindung ist es, die Vorteile des EVAc-Klebersystems, nämlich gute Anfangshaftung, große Verklebungssicherheit, Rückstandsfreiheit beim Abziehen und Lackverträglichkeit, beizubehalten und eine Möglichkeit zu finden, den wesentlichen Nachteil des übermäßigen Aufziehens steuern zu können, ohne die Stärken zu beeinträchtigen, um daraus eine Oberflächenschutzfolie insbesondere für den Transportschutz fabrikneuer Automobile zur Verfügung zu stellen.

Gelöst wird diese Aufgabe durch eine selbstklebende Schutzfolie, wie sie im Hauptanspruch niedergelegt ist. Gegenstand der Unteransprüche sind dabei vorteilhafte Weiterbildungen der selbstklebenden Schutzfolie, besondere Anwendungsmöglichkeiten sowie ein besonders vorteilhaftes Verfahren zur Herstellung der Oberflächenschutzfolie.

Überraschend und unerwartet zeigt für die Klebebeschichtung eine dreikomponentige Mischung aus Vinylacetatcopolymeren je nach Verhältnis der drei Komponenten eine kontinuierliche und präzise Steuerung der Ablösekräfte bei gleichzeitig hoher Anfangsklebkraft und guter Lackverträglichkeit.

Analoge Zweikomponentengemische oder die Reinstoffe zeigen diese Eigenschaftskombination nicht.

Dabei können sich die Vinylacetatcopolymere in ihren Comonomeren, ihrer Molmasse und ihrem Comonomerverhältnis unterscheiden.

Demgemäß betrifft die Erfindung eine Oberflächenschutzfolie aus einer insbesondere polyolefinischen Trägerschicht mit einer Haftklebemasse enthaltend

- 100 Teile einer Komponente A aus einem Vinylacetatcopolymer oder einer Mischung mehrerer Vinylacetatcopolymere zum Beispiel unterschiedlichen Molekulargewichtes mit einem Vinylacetatgehalt von 60 bis 75 Gew.-% und einem Maximum des mittels DMTA gemessenen Verlustfaktors $\tan \delta$, ermittelt bei einer Winkelfrequenz $\omega = 1$ rad/s, von < 0 °C,
- 5 bis 80 Teile einer Komponente B aus einem Vinylacetatcopolymer oder einer Mischung mehrerer Vinylacetatcopolymere unterschiedlichen Molekulargewichtes mit einem Vinylacetatgehalt von 75 bis 95 Gew.-% und einem Maximum des mittels DMTA gemessenen Verlustfaktors tan $\delta$, ermittelt bei einer Winkelfrequenz $\omega$ = 1 rad/s, von $\geq$ - 5 °C sowie

- 5 bis 80 Teile einer Komponente C aus einem Vinylacetatcopolymer oder einer Mischung mehrerer Vinylacetatcopolymere unterschiedlichen Molekulargewichtes mit einem Vinylacetatgehalt von $\leq$ 70 Gew.-%, welche gleichzeitig einen Vinylacetatgehalt von wenigstens 5 Gew.-% unterhalb des Vinylacetatgehaltes der Komponente A enthält.

In einer ersten vorteilhaften Ausführungsform sind die Komponenten A, B und C Copolymere auf Basis von Ethylen und/oder Propylen und/oder weiterer $\alpha$-Olefine und Vinylacetat.

In einer weiteren vorteilhaften Ausführungsform sind die Komponenten A und B Copolymere auf Basis von Ethylen und Vinylacetat und die Komponente C ein Copolymer auf Basis von Ethylen und/oder Propylen und/oder weiterer $\alpha$-Olefine und Vinylacetat.

In einer weiteren vorteilhaften Ausführungsform enthalten die Komponenten A, B und C Ethylenvinylacetatcopolymere.

Als Comonomere des Vinylacetates kommen insbesondere Ethylen, Propylen und höhere $\alpha$-Olefine sowie Mischungen von diesen, aber auch Vinylpyrrolidon in Frage. Als Abmischkomponente kommen Weichmacher wie Polyether unterschiedlicher Molmasse in Frage, um die viskoelastischen Eigenschaften exakt auf die einzelne Anwendung abzustimmen.

Die Eigenschaften von solchen Polymeren lassen sich mit Hilfe einer rheologischen Messung im dynamischen (oszillierenden) Meßmodus eines Rheometers gut quantifizieren.

Hierbei wird die Polymerprobe, die sich zwischen zwei planparallelen Platten befindet, mit einer Kreisfrequenz $\omega$ sinusförmig so deformiert, daß der Bereich der linearen Viskoelastizität nicht verlassen wird. Die Probe vermittelt die erregende Schwingung des Motors unter Verschiebung der Phase $\delta$ und mit verminderter Amplitude auf den Kraftaufnehmer des Rheometers. Man erhält ein komplexes Schubmodul $G^*$, dessen Realteil den elastischen Anteil (Speichermodul $G'$) und dessen Imaginärteil den viskosen Anteil (Verlustmodul $G''$) reflektiert. Der Quotient aus diesen beiden Größen ist tan $\delta$.

$$\tan \delta = G''/G'$$

Bei Variation der Temperatur erhält man tan $\delta$ als Funktion der Temperatur (Dynamischmechanische Thermoanalyse, DMTA). Überstreicht man einen weiten Temperaturbereich, der die Glasübergangstemperatur mit umfaßt, kann man diesen dynamischen Glasübergang, der häufig nicht deckungsgleich ist mit der aus der DSC ermittelten Glasübergangstemperatur, als Maximum von tan $\delta$ detektieren. Die dynamische Glasübergangstemperatur ist in der Regel auch eine Funktion der erregenden Kreisfrequenz, weshalb diese mit angegeben werden muß.

Die beschriebenen Selbstklebemassen können aus Lösung auf eine Trägerfolie aufgebracht oder durch Coextrusion simultan mit der Trägerschicht sowie weiterer Hilfsschichten erzeugt werden.

Als Trägerschicht des Klebers dient vorzugsweise eine thermoplastische Polyolefinfolie, welche unverstreckt ist und mindestens ein Polyolefin aus der Gruppe der Polyethylene (zum Beispiel HDPE, LDPE, MDPE, LLDPE, VLLDPE, Copolymere des Ethylens mit polaren Comonomeren) und der Gruppe der Polypropylene (zum Beispiel Polypropylen-Homopolymere, Polypropylen-Random-Copolymere oder Polypropylen-Block-Copolymere) enthält. Bevorzugt werden Mischungen verschiedener geeigneter Polyolefine verwendet, um die mechanischen und thermischen Eigenschaften sowie Glanz, Extrusionsverhalten, Verankerung des Klebers, usw. optimal einstellen zu können.

Für die Trägerfolien ist eine Dicke von 20 bis 80 $\mu$m bevorzugt, gegebenenfalls einschließlich einer Haftvermittlerschicht, die zwischen der Trägerschicht und der Kleberschicht angeordnet ist.

Die Weichheit der Trägerfolie spielt bei der Verformbarkeit während der Applikation der Schutzfolie eine Rolle, die Kraft bei 10 % Dehnung sollte 25 N/15 mm, vorzugsweise 16 N/15 mm, sowohl in Längs- als auch in Querrichtung nicht überschreiten (Zugversuch nach DIN EN ISO 527-7-5). Daher sollen die Trägerfolien unverstreckt sein. Durch Recken steigt die Kraft bei 10 % Dehnung so stark an, daß die Anschmiegsamkeit nicht mehr gegeben ist.

Um der Trägerfolie die geforderte Witterungsstabilität zu geben, ist der Zusatz von Lichtschutzmitteln zu bevorzugen. Ihre Funktion besteht vorrangig in der Vermeidung der Versprödung der Trägerfolie. Derartige Lichtschutzmittel sind bei Gaechter und Müller, Taschenbuch der Kunststoff-Additive, München 1979, bei Kirk-Othmer (3.) 23, 615 - 627, bei Encycl. Polym. Sci. Technol. 14, 125 - 148 und bei Ullmann (4.) 8, 21; 15, 529, 676 beschrieben. Insbesondere HALS-Lichtschutzmittel sind für die erfindungsgemäße Schutzfolie geeignet. Die Menge des Lichtschutzmittels sollte mindestens 0,15 Gew.-%, vorzugsweise mindestens 0,30 Gew.-% bezogen auf die Trägerfolie betragen.

Eine Verwendung von Antioxidantien für die Folie (zum Beispiel Irganox 1010 oder Tris-Nonylphenyl-phosphit) ist vorteilhaft, aber nicht zwingend notwendig. Weitere geeignete UV-Absorber, Lichtschutz- und Alterungsschutzmittel sind in der EP 0 763 584 aufgeführt.

Eine zusätzliche Verbesserung der Lichtstabilität der Trägerfolie ist auch durch Zusatz von Titandioxid möglich. Vorteilhaft bezüglich der mechanischen Eigenschaften und der Homogenität des Weißgrades sind 5 bis 15 Gew.-% Titandioxidzusatz.

Vorzugsweise liegt die UV-Durchlässigkeit der Schutzfolie im Bereich von 290 bis 360 nm durch das Zusammenwirken von Lichtschutzmitteln und Pigmenten unter ca. 1 %, vorzugsweise unter ca. 0,1 %.

Die so hergestellten Schutzfolien weisen eine gute Haftfestigkeit auf verschiedenen in der Automobilindustrie gebräuchlichen Lacken, auch unter Feuchte- oder Feuchtklimaeinfluß, auf, so daß sich die Schutzfolie auch unter Windeinwirkung oder unter Spannung durch Verklebung auf gewölbten Flächen nicht vom Fahrzeug ablöst. Darüber hinaus zeigt die Selbstklebemasse eine hinreichende Verklebungsfestigkeit besonders innerhalb der ersten Minuten nach Applikation, so daß die Schutzfolie bereits nach einer halben Stunde zum Beispiel einer starken Fahrtwindbelastung (bis zu 160 km/h) ausgesetzt werden kann. Die erfindungsgemäße Klebfolie läßt sich im Gegensatz zu den bisher praxisüblichen EVAc-Klebmassen ohne übermäßigen Kraftaufwand vom Lack abziehen.

Die Abzugskraft der erfindungsgemäßen Schutzfolie auf Lack liegt in der Regel frisch über ca. 0,8 und nach Wechselklimalagerung unter ca. 3,0 N/cm gemäß der in den Beispielen näher erläuterten Meßbedingungen. Auch die Bestrahlung der Schutzfolie mit UV-Licht gemäß DIN 53387 1-A-X über 1000 Stunden, führt zu keinen Mängeln in den Eigenschaften der Schutzfolie: es treten keine Versprödung der Folie und keine Masserückstände beim Abziehen auf.

Die erfindungsgemäße Schutzfolie ist somit besonders zum Montage- oder Transportschutz des frischen Abschlußlacks von Automobilen oder als Verarbeitungs- und Transportschutz von frisch lackierten Oberflächen geeignet. Die Verklebung der Schutzfolie kann dabei ohne das Auftreten jedweder Nachteile bereits eine halbe Stunde nach Ofendurchgang der lackierten Oberflächen erfolgen, obwohl zu diesem Zeitpunkt der Lack noch nicht vollständig ausgehärtet ist.

Weiterhin zeichnet sich die erfindungsgemäße Schutzfolie dadurch aus, daß sie bei Automobilen in großer Breite über Motorhaube, Dach und Kofferraum applizierbar ist und sich aufgrund ihrer Verformbarkeit planen und sogar leicht gewölbten geformten Flächen sehr gut anpaßt. Damit ist der Schutz der am stärksten durch Verschmutzung gefährdeten horizontalen Flächen möglich. Aber auch schmale Bereiche wie zum Beispiel der Türvorsprung unter den Fenstern, der Einstiegsbereich oder Stoßfänger können leicht abgedeckt werden. Der Schutz der vertikalen Flächen am Fahrzeug bietet sich besonders während der Montage derselben an.

Die Schutzfolie ist beständig gegen Sonnenlicht, Feuchtigkeit, Hitze und Kälte, wobei die Witterungsstabilität von wenigstens einem halben Jahr gegeben ist. Auch höchste Sonneneinstrahlungsquoten, wie sie beispielsweise in Florida auftreten, führen nicht zu einem Versagen oder Ablösen der Schutzfolie. Die extrem geringe UV-Durchlässigkeit der Schutzfolie unterstützt die Resistenz des Klebers gegen Sonneneinwirkung.

Darüber hinaus gewährleistet die Festigkeit der Schutzfolie im Vergleich zur Konservierung mit Wachs einen einwandfreien Schutz gegen Verschmutzungen wie Vogelkot und Beschädigungen des gesamten Fahrzeugs durch leichte mechanische Einwirkungen. Die stoffliche oder energetische Verwertung der Schutzfolie ist möglich, insbesondere weil selbige halogenfrei ist.

Im folgenden soll die Erfindung anhand von Beispielen erläutert werden, ohne diese damit allerdings einschränken zu wollen.

**Beispiele**

Alle Beispielfolien wurden durch Beschichtung eines coronavorbehandelten Polyolefinträgers mit den toluolischen Lösungen der einzelnen Kleberrezepturen hergestellt. Der Träger war 60 μm dick und setzte sich wie folgt zusammen:

- 60 Teile      Polypropylen-Blockcopolymer Daplen FFC 2012 (PCD)
- 25        Teile Polypropylenhomopolymer Daplen KFC 201 (PCD)
- 6,3        Teile LDPE Lupolen 1840 H (Elenac)
- 8,4        Teile Titandioxid
- 0,3        Teile UV-Lichtschutzmittel Tinuvin 770 (Ciba-Geigy)

Die Schichtdicke des Haftkleberauftrages betrug nach dem Trocknen jeweils 25 μm, so daß die Muster eine Gesamtdicke von 85 μm aufwiesen.

In Tabelle 1 oben sind Beispielrezepturen gemäß den Patentansprüchen und Gegenbeispiele aufgeführt.

Die Muster wurden streifenweise auf 1K-PU-lackierte (Duraclear II, BASF) Musterbleche verklebt. Die Beurteilung der Muster erfolgte nach folgenden Kriterien:

1. Abzugskraft von Lack nach 30 min bei Raumtemperatur
2. Abzugskraft von Lack nach dreitägiger Lagerung bei 90 °C
3. Anwendungstechnisches Gesamturteil

**Ermittlung der Beurteilungskriterien**

*Abzugskraft von Lack nach 30 min bei Raumtemperatur und Abzugskraft von Lack nach dreitägiger Lagerung bei 90 °C*

Die Klebkräfte wurden bei einem Abzugswinkel von 180°, einer Abzugsgeschwindigkeit von 20 m/min, einer Temperatur von 23 °C ± 1°C und einer relativen Luftfeuchte von 50 % ± 5% gemessen.

*Anwendungstechnisches Gesamturteil*

Das anwendungstechnische Gesamturteil spricht eine Empfehlung aus, ob die Folie die anwendungstechnischen Anforderungen an hohe Anfangsklebkraft, moderate Endklebkraft und gute Lackverträglichkeit insgesamt zufriedenstellend erfüllt.
In Tabelle 1 unten sind die Ergebnisse zusammengefaßt.

Tabelle 1:

| Haftkleberzusammensetzungen der Beispiele und die Abzugskräfte von Lack nach unterschiedlichen Lagerungsbedingungen. | | | | | | | | | | | | | | |
|---|---|---|---|---|---|---|---|---|---|---|---|---|---|---|
| Komp | | 1 | 2 | 3 | 4 | 5 | 6 | 7 | 8 | 9 | 10 | 11 | 12 |
| **Musterrezepturen (Tle.)** | | | | | | | | | | | | | | |
| | Levapren 500 [1] | 100 | 100 | | | | | | | | | | |
| | Levapren 600 [1] | | | 100 | 100 | 100 | 100 | | | | | | |
| A | Levapren 700 [1] | | | | | | | 100 | 100 | 100 | 100 | 100 | 70 |
| A | Baymod 2418 [2] | | | | | | | | | | | | 30 |
| B | Levapren 800 [1] | | 20 | | 20 | | | | | 20 | | 30 | 20 |
| B | Vinnapas L 8688 [3] | | | | | 20 | | | | | 20 | | |
| C | Levapren 450 [1] | | | | | | 30 | | 30 | 30 | 30 | 30 | 30 |
| **Abzugskräfte von Lack (N/cm)** | | | | | | | | | | | | | | |
| | Abzugskraft frisch [4] | 1,0 | 0,8 | 1,3 | 1,3 | 1,2 | 0,8 | 1,5 | 1,4 | 1,0 | 1,2 | 0,9 | 1,3 |
| | Abzugskraft final [5] | 3,7 | 3,9 | 4,2 | 4,0 | 4,1 | 4,2 | 4,5 | 4,4 | 2,6 | 2,8 | 1,9 | 2,9 |
| | Gesamturteil | n.i. O. | n.i. O. | n.i. O. | n.i. O. | n.i. O. | n.i.O. | n.i.O. | n.i.O. | i.O. | i.O. | i.O. | i.O. |

Abk.: i.O. = in Ordnung, n.i.O. = nicht in Ordnung
[1] Polyethylenvinylacetat, Hersteller Bayer. Anteil Vinylacetat entspricht der Nummer geteilt durch 10 in Gew.-%.
[2] Polyethylenvinylacetat, Hersteller Bayer, Anteil Vinylacetat 68 Gew.-%.
[3] Terpolymer aus Vinylacetat, Ethylen und Propylen, Hersteller Air Products.
Anteil Vinylacetat 80 Gew.-%.
[4] Abzugskraft von Lack nach 30 min Verklebungszeit bei Raumtemperatur.
[5] Abzugskraft von Lack nach 3 Tagen Verklebungszeit bei 90 °C.

**Diskussion**

Alle Beispiele zeigen eine gute Anfangshaftung nach 30 min Lagerung bei Raumtemperatur, wobei "gut" in Praxistests als ca. ≥ 0,8 N/cm eingestuft wird. Deutliche Unterschiede offenbaren sich bei den Endhaftungswerten, die sich nach 3 Tagen Lagerung bei 90 °C eingestellt haben.

Es zeigt sich, daß nur die Dreikomponentengemische eine signifikante Reduzierung der Haftungswerte erzielen. Alle Ein- und Zweikomponentenhaftkleber liegen in der Endhaftung deutlich über 3 N/cm, was in der Praxis allgemein als übermäßig kraftaufwendig beim Wiederablösen der Schutzfolie vom Kraftfahrzeuglack empfunden wird. An den Mustern 8, 9 und 11 läßt sich die kontinuierliche Regelbarkeit der Endhaftung durch die Komponente B erkennen, ohne daß die Anfangshaftung unakzeptabel niedrig wird.

Insgesamt werden die Muster 1 bis 8 als anwendungstechnisch nicht in Ordnung und die Muster 9 bis 12 als anwendungstechnisch in Ordnung eingestuft.

Da die Klebkräfte auf verschiedenen Lacken unterschiedlich sind, eröffnet sich so die Möglichkeit, auch für unterschiedliche Haftgründe jeweils ein geeignetes maßgeschneidertes Klebkraftprofil einzustellen.

**Patentansprüche**

1. Selbstklebende Schutzfolie für die Oberflächenschutzanwendungen für lackierte Fahrzeuge oder Fahrzeugteile enthaltend eine ein- oder mehrlagige insbesondere polyolefinische Trägerschicht und eine selbstklebende Schicht, **dadurch gekennzeichnet, daß** die Selbstklebemasse
100 Teile einer Komponente A aus einem Vinylacetatcopolymer oder einer Mischung mehrerer Vinylacetatcopolymere unterschiedlichen Molekulargewichtes mit einem Vinylacetatgehalt von 60 bis 75 Gew.-% und einem Maximum des mittels DMTA gemessenen Verlustfaktors $\tan \delta$, ermittelt bei einer Winkelfrequenz $\omega = 1$ rad/s, von < 0 °C,
5 bis 80 Teile einer Komponente B aus einem Vinylacetatcopolymer oder einer Mischung mehrerer Vinylacetatcopolymere unterschiedlichen Molekulargewichtes mit einem Vinylacetatgehalt von 75 bis 95 Gew.-% und einem Maximum des mittels DMTA gemessenen Verlustfaktors $\tan \delta$, ermittelt bei einer Winkelfrequenz $\omega = 1$ rad/s, von $\geq - 5$ °C sowie
5 bis 80 Teile einer Komponente C aus einem Vinylacetatcopolymer oder einer Mischung mehrerer Vinylacetatcopolymere unterschiedlichen Molekulargewichtes mit einem Vinylacetatgehalt von $\leq 70$ Gew.-%, welche gleichzeitig einen Vinylacetatgehalt von wenigstens 5 Gew.-% unterhalb des Vinylacetatgehaltes der Komponente A enthält.

2. Selbstklebende Schutzfolie nach Anspruch 1, **dadurch gekennzeichnet, daß** die Komponenten A, B und C Copolymere auf Basis von Ethylen und/oder Propylen und/oder weiterer $\alpha$-Olefine und Vinylacetat sind.

3. Selbstklebende Schutzfolie nach Anspruch 1, **dadurch gekennzeichnet, daß** die Komponenten A und B Copolymere auf Basis von Ethylen und Vinylacetat sind und die Komponente C ein Copolymer auf Basis von Ethylen und/oder Propylen und/oder weiterer $\alpha$-Olefine und Vinylacetat ist.

4. Selbstklebende Schutzfolie nach Anspruch 1, **dadurch gekennzeichnet, daß** die Komponenten A, B und C Ethylenvinylacetatcopolymere enthalten.

5. Selbstklebende Schutzfolie nach mindestens einem der vorhergehenden Ansprüche, **dadurch gekennzeichnet, daß** die Dicke der Trägerschicht zwischen 20 und 80 µm beträgt, gegebenenfalls einschließlich einer Haftvermittlerschicht, die zwischen der Trägerschicht und der Kleberschicht angeordnet ist.

6. Selbstklebende Schutzfolie nach mindestens einem der vorhergehenden Ansprüche, **dadurch gekennzeichnet, daß** die Trägerschicht mindestens ein Lichtschutzmittel in einer Menge von mindestens 0,15 Gew.-% enthält.

7. Selbstklebende Schutzfolie nach mindestens einem der vorhergehenden Ansprüche, **dadurch gekennzeichnet, daß** die UV-Durchlässigkeit der Schutzfolie im Wellenlängenbereich von 290 bis 360 nm unter 1 % liegt.

8. Verfahren zur Herstellung einer selbstklebenden Schutzfolie nach zumindest einem der vorhergehenden Ansprüche durch simultane Coextrusion von Kleberschicht, Trägerschicht sowie weiteren Hilfsschichten.

9. Verwendung einer Schutzfolie nach zumindest einem der vorhergehenden Ansprüche auf frisch lackierten Oberflächen von Automobilen oder Automobilteilen als Montage- oder Transportschutz.

10. Verwendung einer Schutzfolie nach zumindest einem der vorhergehenden Ansprüche zum Schutz von empfindlichen Lack-, Metall-, Kunststoff- oder Glasoberflächen.

**Claims**

1. A self-adhesive protective film for the surface protection applications for painted vehicles or vehicle parts, comprising a single-ply or multi-ply backing layer, particularly a polyolefinic backing layer, and a self-adhesive layer, **characterized in that** the self-adhesive composition comprises

 100 parts of a component A comprising a vinyl acetate copolymer or a mixture of two or more vinyl acetate copolymers of, for example, different molecular weight, having a vinyl acetate content of from 60 to 75% by weight and a maximum of the loss factor tan $\delta$, measured by means of DMTA and determined at an angular frequency $\omega = 1$ rad/s, of $< 0°C$,

 from 5 to 80 parts of a component B comprising a vinyl acetate copolymer or a mixture of two or more vinyl acetate copolymers of different molecular weight, having a vinyl acetate content of from 75 to 95% by weight and a maximum of the loss factor tan $\delta$, measured by means of DMTA and determined at an angular frequency $\omega = 1$ rad/s, of $\geq -5°C$, and

 from 5 to 80 parts of a component C comprising a vinyl acetate copolymer or a mixture of two or more vinyl acetate copolymers of different molecular weight, having a vinyl acetate content of $\leq 70\%$ by weight, which at the same time has a vinyl acetate content of at least 5% by weight below the vinyl acetate content of component A.

2. The self-adhesive protective film of claim 1, **characterized in that** components A, B, and C are copolymers based on ethylene and/or propylene and/or further $\alpha$-olefins and vinyl acetate.

3. The self-adhesive protective film of claim 1, **characterized in that** components A and B are copolymers based on ethylene and vinyl acetate and component C is a copolymer based on ethylene and/or propylene and/or further $\alpha$-olefins and vinyl acetate.

4. The self-adhesive protective film of claim 1, **characterized in that** components A, B, and C comprise ethylene vinyl acetate copolymers.

5. The self-adhesive protective film of at least one of the preceding claims, **characterized in that** the thickness of the backing layer is between 20 and 80 $\mu$m, including where appropriate an adhesion promoter layer disposed between the backing layer and the adhesive layer.

6. The self-adhesive protective film of at least one of the preceding claims, **characterized in that** the backing layer comprises at least one light stabilizer in an amount of at least 0.15% by weight.

7. The self-adhesive protective film of at least one of the preceding claims; **characterized in that** the UV permeability of the protective film in the wavelength range from 290 to 360 nm is below 1%.

8. A process for producing a self-adhesive protective film of at least one of the preceding claims by simultaneous coextrusion of adhesive layer, backing layer, and further, auxiliary layers.

9. The use of a protective film of at least one of the preceding claims on freshly painted surfaces of automobiles or automobile parts as assembly or transit protection.

10. The use of a protective film of at least one of the preceding claims for protecting sensitive paint, metal, plastic or glass surfaces.


**Revendications**

1. Feuille de protection autocollante pour des applications de protection de surfaces de véhicules peints ou de pièces de véhicules peintes, qui contient une couche de support, simple ou multiple, en particulier en polyoléfine, et une couche autocollante,
 **caractérisée en ce que** la pâte autocollante contient :

 - 100 parties d'un composant A constitué d'un copolymère d'acétate de vinyle ou d'un mélange de plusieurs copolymères d'acétate de vinyle de différents poids moléculaires, avec une teneur en acétate de vinyle de 60 à 75% en poids et un maximum du facteur de perte tan $\delta$, mesuré par DMTA et déterminé à une fréquence angulaire $\omega = 1$ rad/s $< 0°C$,

- de 5 à 80 parties d'un composant B constitué d'un copolymère d'acétate de vinyle ou d'un mélange de plusieurs copolymères d'acétate de vinyle de différents poids moléculaires, avec une teneur en acétate de vinyle de 75 à 95% en poids et un maximum du facteur de perte tan δ mesuré par DMTA et déterminé à une fréquence angulaire ω = 1 rad/s de ≥ -5°C et

- de 5 à 80 parties d'un composant C constitué d'un copolymère d'acétate de vinyle ou d'un mélange de plusieurs copolymères d'acétate de vinyle de différents poids moléculaires, avec une teneur en acétate de vinyle ≤ 70% en poids et qui comprend en même temps une teneur en acétate de vinyle d'au moins 5% en poids inférieure à la teneur en acétate de vinyle du composant A.

2. Feuille de protection autocollante selon la revendication 1, **caractérisée en ce que** les composants A, B et C sont des copolymères à base d'éthylène et/ou de propylène et/ou d'autres α-oléfines et d'acétate de vinyle.

3. Feuille de protection autocollante selon la revendication 1, **caractérisée en ce que** les composants A et B sont des copolymères à base d'éthylène et d'acétate de vinyle, le composant C étant un copolymère à base d'éthylène et/ou de propylène et/ou d'autres α-oléfines et d'acétate de vinyle.

4. Feuille de protection autocollante selon la revendication 1, **caractérisée en ce que** les composants A, B et C contiennent des copolymères d'éthylène et d'acétate de vinyle.

5. Feuille de protection autocollante selon au moins l'une quelconque des revendications précédentes, **caractérisée en ce que** l'épaisseur de la couche de support est comprise entre 20 et 80 μm, le cas échéant avec une couche de renforcement de l'adhérence qui est disposée entre la couche de support et la couche d'adhésif.

6. Feuille de protection autocollante selon au moins l'une quelconque des revendications précédentes, **caractérisée en ce que** la couche de support contient au moins un agent de protection contre la lumière en quantité d'au moins 0,15% en poids.

7. Feuille de protection autocollante selon au moins l'une quelconque des revendications précédentes, **caractérisée en ce que** la perméabilité de la feuille de protection aux UV dans la plage de longueur d'onde de 290 à 360 nm est inférieure à 1%.

8. Procédé pour la fabrication d'une feuille de protection autocollante selon au moins l'une quelconque des revendications précédentes par coextrusion simultanée d'une couche d'adhésif, d'une couche de support ainsi que d'autres couches auxiliaires.

9. Utilisation d'une feuille de protection selon au moins l'une quelconque des revendications précédentes sur des surfaces fraîchement peintes d'automobiles ou de pièces d'automobiles, comme protection pendant le montage ou le transport.

10. Utilisation d'une feuille de protection selon au moins l'une quelconque des revendications précédentes, pour la protection de surfaces sensibles de peinture, de métal, de matière synthétique ou de verre.